# EUROPEAN PATENT APPLICATION

(11) **EP 2 852 102 A1**
(43) Date of publication of application: **25.03.2015**
(21) Application number: 14182812.9
(22) Date of filing: 29.08.2014
(51) Int. Cl.: H04L 12/40

(54) **Information processing apparatus, communication method, and computer-readable storage medium storing communication program**

(30) Priority: 20.09.2013 JP 2013196079
(71) Applicant: Fujitsu Limited, Kawasaki-shi, Kanagawa 211-8588 (JP)
(72) Inventor: Morosawa, Atsushi, Kanagawa, 211-8588 (JP)
(74) Representative: Hoffmann Eitle

(57) **Abstract**

Node IDs are stored in an NAT (145) in association with MAC addresses, and bit information indicating whether to reverse a channel allocation rule that is based on whether a node ID is an odd number or an even number is stored in a reverse register (146). Also, information indicating whether to use each 60G wireless module (15a-15d) is stored in a disable register (147). Then, a CH determination unit (148) allocates a channel to each 60G wireless module (15a-15d) based on the NAT (145), the reverse register (146), and the disable register (147). That is, the CH determination unit (148) allocates a channel, for the 60G wireless module (15a-15d) to be used, based on whether the node ID is an odd number or an even number and whether to reverse the channel allocation rule that is based on whether the node ID is an odd number or an even number.

## Description

### FIELD

The embodiments discussed herein are related to an information processing apparatus, a communication method, and a computer-readable storage medium storing a communication program.

### BACKGROUND

In recent years, a highly integrated server including a large number of nodes mounted in a rack is more commonly used as a server for a data center or for cloud computing. Here, a node is an information processing apparatus including a CPU, a memory, a storage, a crossbar switch, and the like.

For example, several tens to hundreds of nodes are mounted in a rack. Also, connection between nodes may be cable connection or backplane connection. However, in the case of cable connection, the number of cables is quite large, and maintenance is made burdensome by insertion or removal of cables. Also, in the case of backplane connection, the risk due to the backplane being damaged is increased. Also, in the case of backplane connection, the entire system has to be stopped at the time of maintenance of the backplane. Accordingly, a technique for wirelessly connecting the nodes is desired.

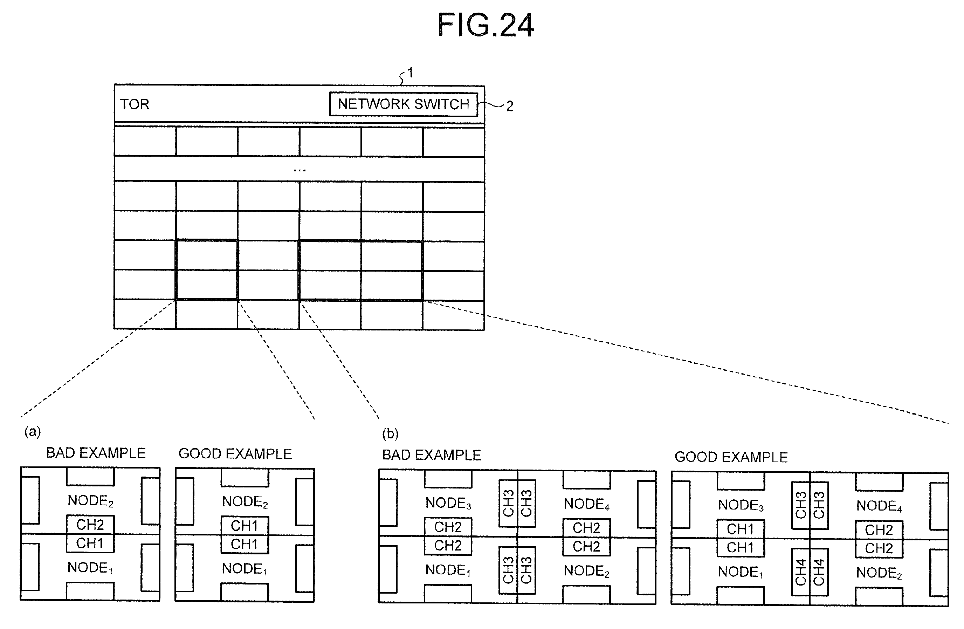

FIG. 24 is a diagram illustrating an information processing system where a large number of nodes are mounted in a rack. The information processing system includes, in a TOR (Top Of Rack) at the top of a rack 1, a network switch 2 for connecting with the outside such as the Internet. Nodes are wirelessly connected, and each node includes four wireless modules for communicating with adjacent nodes above, below, left and right. The wireless modules perform communication by using four channels.

Taking one node as an example, channels used by the upper, lower, left and right wireless modules of a node and the channels used by wireless modules, of adjacent nodes, corresponding to the wireless modules of the node have to be set to be the same. FIG. 24 illustrates bad examples and good examples of channel allocation.

As illustrated by the good example of (a) of FIG. 24, in the case where the channel allocated to an upper wireless module used by a node₁ to communicate with an upper adjacent node₂ is CH1, the corresponding channel of the node₂, that is, the channel allocated to a lower wireless module, has to be CH1. On the other hand, as illustrated by the bad example of (a) of FIG. 24, in the case where the channel allocated to the upper wireless module used by the node₁ to communicate with the upper adjacent node₂ is CH1, and the corresponding channel of the node₂ is CH2, transmission/reception is not performed accurately.

Also, the channels to be used by the upper and lower wireless modules of a node should not be the same as the channels to be used by the upper and lower wireless modules of nodes that are adjacent on the left and right of the node. In the same manner, the channels to be used by the left and right wireless modules of a node should not be the same as the channels to be used by the left and right wireless modules of nodes that are adjacent on the top and bottom of the node.

For example, as illustrated by the good example of (b) of FIG. 24, in the case where the channel to be used by the upper wireless module of the node₁ is CH1, the channel to be used by the upper wireless module of the node₂ adjacent on the right of the node₁ is CH2 that is different from CH1. In the case where the channel to be used by the upper wireless module of the node₁ is CH2, the channel to be used by the upper wireless module of the node₂ adjacent on the right of the node₁ should not be CH2, as illustrated by the bad example of (b) of FIG. 24.

Also, as illustrated by the good example of (b) of FIG. 24, in the case where the channel to be used by the right wireless module of the node₁ is CH4, the channel to be used by the right wireless module of a node₃ adjacent on the top of the node₁ is CH3 that is different from CH4. In the case where the channel to be used by the right wireless module of the node₁ is CH3, the channel to be used by the right wireless module of the node₃ adjacent on the top of the node₁ should not be CH3, as illustrated by the bad example of (b) of FIG. 24.

With a highly dense and highly integrated information processing system where several tens to hundreds of nodes are mounted in a rack, each node is small, and the distance between the nodes is also small. Accordingly, if adjacent nodes perform communication by the wireless modules in the same direction by using the same channel, radio wave interference may occur, resulting in major problems such as communication speed deterioration, disablement of communication. Thus, to prevent radio wave interference, channel allocation has to be performed in such a way that the same channels are not adjacent to each other, as illustrated in (b) of FIG. 24.

Regarding channel allocation, there is a conventional technique for setting, in wireless communication, a channel based on the number of hops to an access point performing access control (for example, see Japanese Laid-open Patent Publication No. 2006-238028). Also, there is a conventional technique for selecting a channel to be allocated, based on the scanning result of each channel (for example, see Japanese Laid-open Patent Publication No. 2007-228158). Moreover, there is a conventional technique for determining, in a mesh network, a channel by using channel scanning metrics, topology metrics, and routing metrics (for example, see Japanese National Publication of International Patent Application No. 2008-533834). Moreover, there is a conventional technique for allocating, in a wireless network, a channel with the least radio wave interference to a wireless device (for example, Japanese Laid-open Patent Publication No. 2008-1935584).

With the information processing system illustrated in FIG. 24, channels are manually set so that adjacent nodes do not perform wireless communication in the same direction by using the same channel. However, a channel to be used wirelessly has to be set for each node in the rack, and there is a problem that manual channel setting is burdensome. Also, with manual channel setting, there is a possibility of setting mistake.

Accordingly, it is an object in one aspect of an embodiment of the invention to provide an information processing apparatus capable of automatically allocating a channel to be used by a wireless module.

### SUMMARY

According to an aspect of an embodiment, an information processing apparatus includes an allocation unit that allocates a channel to be used for wireless communication by the information processing apparatus in a housing based on position information of the information processing apparatus in the housing in such a way that the channel is not same as a channel to be used for wireless communication in a same direction by an adjacent information processing apparatus; and a communication unit that performs wireless communication with another information processing apparatus in the housing by using the channel allocated by the allocation unit.

### BRIEF DESCRIPTION OF DRAWINGS

FIG. 1 is a diagram illustrating a structure of an information processing system according to a first embodiment;
FIG. 2 is a diagram illustrating allocation of channels in a 60 GHz band;
FIG. 3 is a diagram illustrating a structure of a node illustrated in FIG. 1;
FIG. 4 is a diagram illustrating allocation of four channels to be used in 60G wireless communication;
FIG. 5 is a diagram illustrating structures of an XB and a 60G wireless module according to the first embodiment;
FIG. 6 is a diagram illustrating examples of identifiers stored in an NAT according to the first embodiment;
FIG. 7 is a diagram illustrating an example of a disable register;
FIG. 8 is a flow chart illustrating a flow of an initial setting process by the information processing system according to the first embodiment;
FIG. 9 is a diagram illustrating example allocation of node IDs, reverse registers, and disable registers;
FIG. 10 is a flow chart illustrating a flow of a channel allocation process by a CH determination unit according to the first embodiment;
FIG. 11 is a flow chart illustrating a flow of a process of allocating a channel to a 60G wireless module by searching for an available channel;
FIG. 12 is a diagram illustrating a structure of an XB according to a second embodiment;
FIG. 13 is a diagram illustrating an example of identifiers stored in an NAT according to the second embodiment;
FIG. 14 is a flow chart illustrating a flow of an initial setting process by an information processing system according to the second embodiment;
FIG. 15 is a diagram illustrating example allocation of node IDs and disable registers;
FIG. 16 is a flow chart illustrating a flow of a channel allocation process by a CH determination unit according to the second embodiment;
FIG. 17 is a diagram illustrating a structure of an XB according to a third embodiment;
FIG. 18 is a flow chart illustrating a flow of an initial setting process by an information processing system according to the third embodiment;
FIG. 19 is a diagram illustrating example allocation of reverse registers and disable registers;
FIG. 20 is a flow chart illustrating a flow of a channel allocation process by a CH determination unit according to the third embodiment;
FIG. 21 is a diagram illustrating allocation of channels to be used in 60G wireless communication according to a fourth embodiment;
FIG. 22 is a flow chart illustrating a flow of a channel allocation process by a CH determination unit according to the fourth embodiment;
FIG. 23 is a diagram illustrating a hardware structure of an XB for executing a communication program; and
FIG. 24 is a diagram illustrating an information processing system where a large number of nodes are mounted in a rack.

### DESCRIPTION OF EMBODIMENTS

Preferred embodiments of the present invention will be explained with reference to accompanying drawings. The embodiments are not to limit the technology disclosed herein.

### [a] First Embodiment

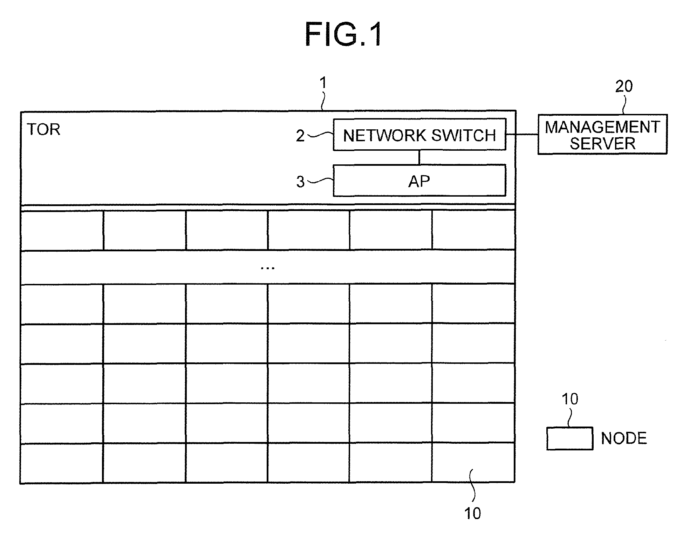

First, a structure of an information processing system according to a first embodiment will be described. FIG. 1 is a diagram illustrating a structure of the information processing system according to the first embodiment. As illustrated in FIG. 1, the information processing system according to the first embodiment is a system including a highly integrated server having several tens to hundreds of nodes 10 mounted in a rack 1, and a management server 20. Also, the information processing system includes, in a TOR, a network switch 2 for connecting with the outside such as the Internet, and an AP3 that is a wireless LAN access point.

The management server 20 is connected to the highly integrated server via the network switch 2. The management server 20 has information indicating at which positions in the rack the nodes 10 of which MAC (Media Access Control) addresses are accommodated, and manages each node 10 in the rack.

Each node 10 has a function of a wireless LAN station, and is capable of wirelessly communicating with another node 10 or the management server 20 via the AP3. Also, the nodes 10 are connected by 60G wireless communication, and each node 10 includes four 60G wireless modules to communicate with adjacent nodes above, below, left and right. Here, 60G wireless communication is wireless communication that uses 60 G (giga) Hz band as a frequency band.

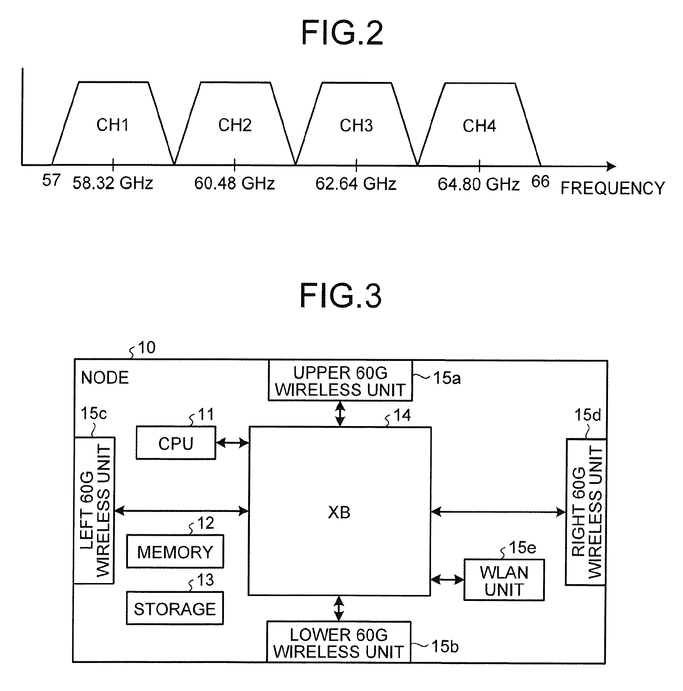

FIG. 2 is a diagram illustrating allocation of channels in a 60 GHz band. As illustrated in FIG. 2, as a channel plan, four channels are allocated in a 60 GHz band. When taking the four channels as CH1, CH2, CH3 and CH4, the center frequency of CH1 is 58.32 GHz, the center frequency of CH2 is 60.48 GHz, the center frequency of CH3 is 62.64 GHz, and the center frequency of CH4 is 64.80 GHz.

FIG. 3 is a diagram illustrating a structure of the node 10 illustrated in FIG. 1. As illustrated in FIG. 3, the node 10 is an information processing apparatus including a CPU 11, a memory 12, a storage 13, and an XB 14. Also, the node 10 includes an upper 60G wireless unit 15a, a lower 60G wireless unit 15b, a left 60G wireless unit 15c, a right 60G wireless unit 15d, and a WLAN unit 15e. The node 10 is accommodated inside a housing.

The CPU 11 is a central processing unit that reads a program from the memory 12, and executes the program. The memory 12 is a RAM (Random Access Memory) for storing the program, results in the midway obtained in the execution of the program, and the like. The storage 13 is a nonvolatile memory for storing data, and is a NAND flash memory, for example. Also, the storage 13 stores programs installed in the node 10.

The XB 14 is a crossbar switch used to communicate with other nodes 10. The XB 14 is one LSI. The upper 60G wireless unit 15a is used for 60G wireless communication with a node 10 that is adjacent on the top in the rack 1. The lower 60G wireless unit 15b is used for communication with a node 10 that is adjacent on the bottom in the rack 1. The left 60G wireless unit 15c is used for communication with a node 10 that is adjacent on the left in the rack 1. The right 60G wireless unit 15d is used for communication with a node 10 that is adjacent on the right in the rack 1.

The communication speed of 60G wireless communication may be realized to be about several gigabits per second (Gbps), and is faster than that of wireless LAN. However, with 60G wireless communication, radio wave is not easily transmitted, and the housing becomes a barrier for the radio wave, and it is difficult to communicate with nodes 10 that are adjacent on the top, bottom, left and right by using one 60G wireless module. Accordingly, the node 10 includes four 60G wireless modules for communicating with the nodes 10 that are adjacent on the top, bottom, left and right, respectively. The four 60G wireless modules perform communication using four channels. The WLAN unit 15e has a function of a wireless LAN station, and performs wireless communication with the AP3.

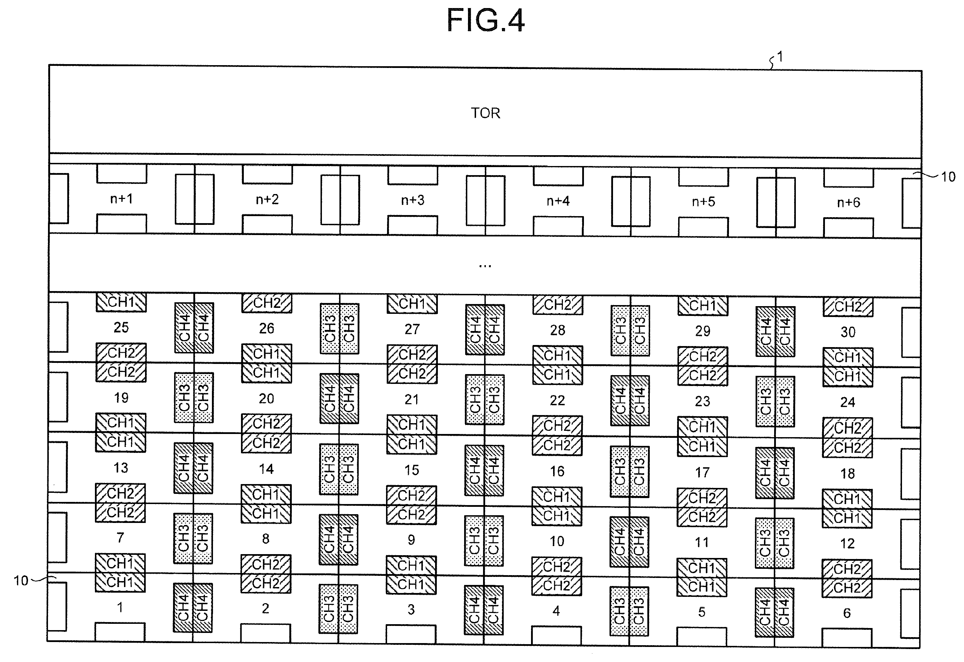

FIG. 4 is a diagram illustrating allocation of four channels to be used in 60G wireless communication. In FIG. 4, 1, 2, 3, ..., n+5, and n+6 are node IDs for identifying respective nodes 10, and represent node₁, node₂, node₃, ..., nodeₙ₊₅, and nodeₙ₊₆. As illustrated in FIG. 4, each node 10 allocates four channels CH1, CH2, CH3 and CH4 to respective 60G wireless modules. The upper 60G wireless unit 15a and the lower 60G wireless unit 15b perform communication with nodes 10 that are adjacent on the top and bottom by using CH1 and CH2, respectively. Also, the left 60G wireless unit 15c and the right 60G wireless unit 15d perform communication with nodes 10 that are adjacent on the left and right by using CH3 and CH4, respectively.

For example, a node₈ communicates with a node₁₄ on the top by using CH1, communicates with a node₂ on the bottom by using CH2, communicates with a node₇ on the left by using CH3, and communicates with a node₉ on the right by using CH4. The node₉ communicates with a node₁₅ on the top by using CH2, communicates with a node₃ on the bottom by using CH1, communicates with the node₈ on the left by using CH4, and communicates with a node₁₀ on the right by using CH3. The node₁₄ communicates with a node₂₀ on the top by using CH2, communicates with the node₈ on the bottom by using CH1, communicates with a node₁₃ on the left by using CH4, and communicates with the node₁₅ on the right by using CH3.

That is, the node₈ and the node₉ that are horizontally adjacent to each other respectively use CH1 and CH2 that are different from each other at the time of communicating with the nodes 10 that are adjacent on the top. Also, the node₈ and the node₉ that are horizontally adjacent to each other respectively use CH2 and CH1 that are different from each other at the time of communicating with the nodes 10 that are adjacent on the bottom. Also, the node₈ and the node₁₄ that are vertically adjacent to each other respectively use CH3 and CH4 that are different from each other at the time of communicating with the nodes 10 that are adjacent on the left. Moreover, the node₈ and the node₁₄ that are vertically adjacent to each other respectively use CH4 and CH3 that are different from each other at the time of communicating with the nodes 10 that are adjacent on the right.

In this manner, by adjacent nodes 10 not performing communication by the 60G wireless modules in the same direction by using the same channel, occurrence of radio wave interference may be prevented.

In each level of the rack 1, channels are allocated in the same manner with respect to nodes 10 whose node IDs are odd numbers, and channels are allocated in the same manner with respect to nodes 10 whose node IDs are even numbers. For example, allocation of channels is the same for the node₁₃, the node₁₅ and a node₁₇, and for the node₁₄, a node₁₆ and a node₁₈. That is, in each level of the rack 1, the way channels are allocated is decided based on whether the node ID is an odd number or an even number.

Also, when taking the lowermost level of the rack 1 as 1 with the number being increased as the level becomes higher, the rules of channels allocated to nodes 10 with an odd-numbered node ID and an even-numbered node ID are reversed between an odd-numbered level and an even-numbered level. For example, a channel that is allocated to the upper 60G wireless unit 15a of a node 10 with an odd-numbered node ID is CH1 in the first level, but in the second level, a channel that is allocated to the upper 60G wireless unit 15a of a node 10 with an even-numbered node ID is CH1. This is because the number of nodes mounted in each level is six, which is an even number, and in the case where the number of nodes mounted in each level is an odd number, the rules of channels allocated to nodes 10 with an odd-numbered node ID and an even-numbered node ID are not changed between an odd-numbered level and an even-numbered level.

Also, in the case there is no adjacent node 10, the corresponding 60G wireless module is not used. For example, the node₁ to the node₆ mounted in the lowermost level of the rack 1 do not use the lower 60G wireless units 15b. The nodeₙ₊₁ to the nodeₙ₊₆ mounted in the topmost level of the rack 1 do not use the upper 60G wireless units 15a. Also, the nodes 10 mounted at the left end of the rack 1 do not use the left 60G wireless units 15c. The nodes 10 mounted at the right end of the rack 1 do not use the right 60G wireless units 15d.

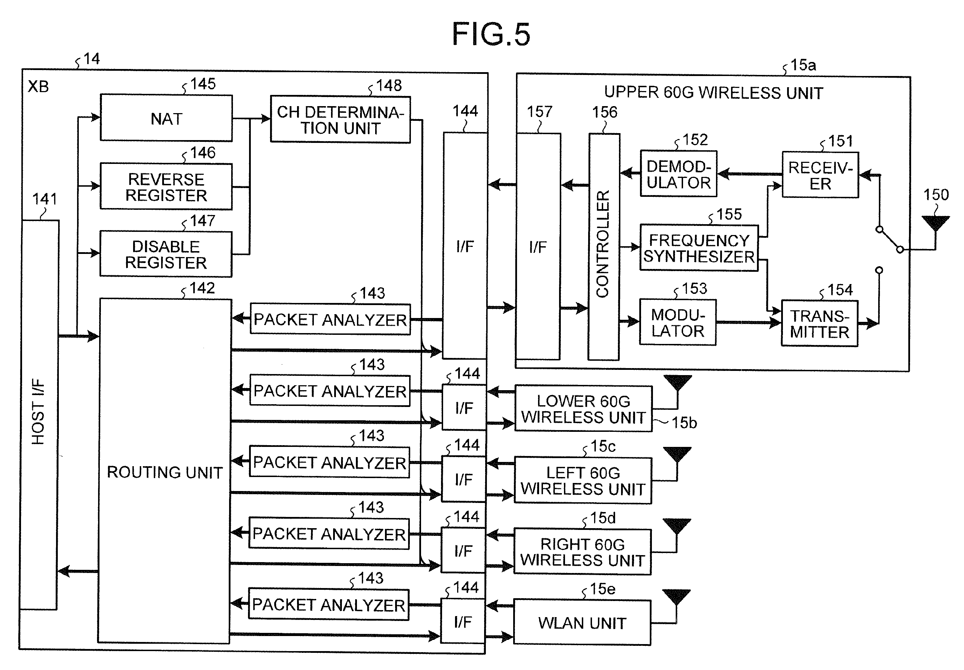

Next, structures of the XB 14 and the 60G wireless module according to the first embodiment will be described. FIG. 5 is a diagram illustrating structures of the XB 14 and the 60G wireless module according to the first embodiment. The upper 60G wireless unit 15a, the lower 60G wireless unit 15b, the left 60G wireless unit 15c, and the right 60G wireless unit 15d have the same structure, and thus, in FIG. 5, the structure of only the upper 60G wireless unit 15a is illustrated.

As illustrated in FIG. 5, the XB 14 includes a host I/F 141, a routing unit 142, five packet analyzers 143, five I/Fs 144, an NAT 145, a reverse register 146, a disable register 147, and a CH determination unit 148.

The host I/F 141 is an interface to the CPU 11 of the self node, and transfers a packet received from the CPU 11 to the routing unit 142, and a packet received from the routing unit 142 to the CPU 11 of the self node.

The routing unit 142 receives a packet from the host I/F 141, and determines the routing destination of the received packet using a routing table. The routing table here is a table associating the destination of a packet and a routing destination. Then, the routing unit 142 transfers the packet to one of the I/Fs 144 based on the routing destination.

Also, the routing unit 142 receives a packet from one of the packet analyzers 143, and determines the routing destination of the received packet using the routing table. Then, the routing unit 142 transfers the packet to the host I/F 141 or one of the I/Fs 144 based on the routing destination.

The packet analyzer 143 receives a packet from the corresponding I/F 144, analyzes the packet, and transfers the packet to the routing unit 142 together with the analysis result. The I/F 144 converts a signal received from the 60G wireless module or the WLAN unit 15e into a packet, and transfers the packet to the corresponding packet analyzer 143. Also, the I/F 144 receives a packet routed by the routing unit 142, and instructs the corresponding 60G wireless module or the WLAN unit 15e to transmit the packet.

The NAT (Name Address Table) 145 is a search table used for searching for an identifier for identifying each node 10. The node 10 searches for the identifier of the self node using the NAT 145, and transfers the retrieved identifier to the CH determination unit 148.

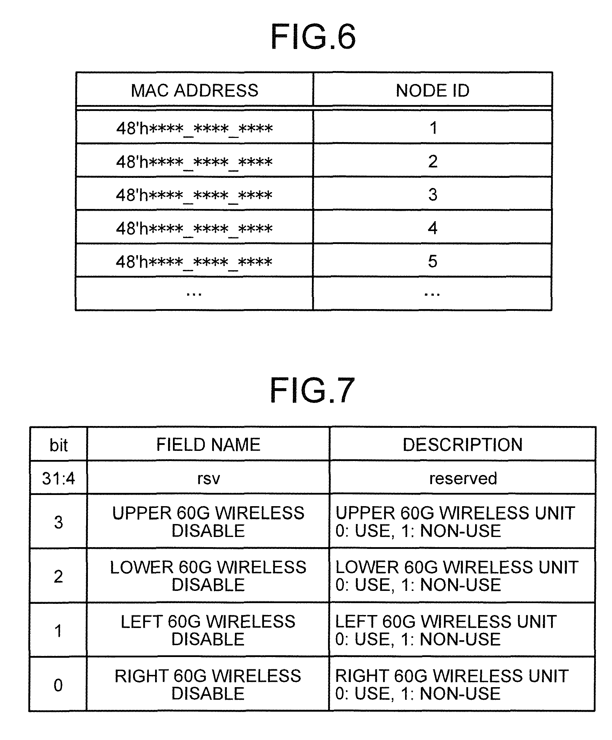

FIG. 6 is a diagram illustrating examples of identifiers stored in the NAT 145 according to the first embodiment. As illustrated in FIG. 6, the NAT 145 stores, in association, MAC addresses and node IDs as the identifiers of the nodes 10. The node 10 searches for a node ID based on the MAC address using the NAT 145.

For example, the node ID of a node 10 corresponding to a MAC address 48'h****_****_**** is 1. The MAC address is 48 bits, and "h" indicates a hexadecimal representation, and "*" indicates a number in the hexadecimal representation. One "*" indicates 4-bit information, and 12 "*" indicate 4 x 12 = 48 bits. A description is given here for a case where a MAC address is used, but it is also possible to use other than the MAC address.

The reverse register 146 is a 1-bit register whose value is 0 for an odd-numbered level, and 1 for an even-numbered level, when taking the lowermost level of the rack 1 as 1 with the number being increased as the level becomes higher. As illustrated in FIG. 4, the rules of channels to be set to nodes 10 with an odd-numbered node ID and an even-numbered node ID are different between an odd-numbered level and an even-numbered level of the rack 1. For example, channels that are used by the upper 60G wireless units 15a of the node₁, the node₃, and the node₅, whose node IDs are odd-numbered, are CH1 in the first level, but in the second level, channels that are used by the upper 60G wireless units 15a of the node₇, the node₉, and the node₁₁, whose node IDs are odd-numbered, are CH2. Thus, the CH determination unit 148 reverses the channel allocation rule that is based on whether the node ID is odd-numbered or even-numbered, using 1-bit information of the reverse register 146.

In FIG. 4, the channel allocation rule that is based on whether the node ID is odd-numbered or even-numbered is different for an odd-numbered level and an even-numbered level of the rack 1 because the number of nodes mounted in each level is six, which is an even number. However, in the case where the number of nodes mounted in each level is an odd number, the channel allocation rule that is based on whether the node ID is odd-numbered or even-numbered is the same for an odd-numbered level and an even-numbered level of the rack 1, and the reverse register 146 becomes unnecessary.

The disable register 147 is a register storing information of whether to use each 60G wireless module or not. FIG. 7 is a diagram illustrating an example of the disable register 147. As illustrated in FIG. 7, the disable register 147 is a 32-bit register, and right 60G wireless disable for bit 0 indicates whether to use the right 60G wireless unit 15d or not, and left 60G wireless disable for bit 1 indicates whether to use the left 60G wireless unit 15c or not. Lower 60G wireless disable for bit 2 indicates whether to use the lower 60G wireless unit 15b or not, and upper 60G wireless disable for bit 3 indicates whether to use the upper 60G wireless unit 15a or not. The other bits 4 to 31 are saved for future use (reserved).

The CH determination unit 148 allocates a channel to each 60G wireless module using the NAT 145, the reverse register 146 and the disable register 147. That is, the CH determination unit 148 allocates a channel based on the node ID received from the NAT 145, reversal/non-reversal of the channel allocation rule indicated by the reverse register 146, and use information of each 60G wireless module indicated by the disable register 147.

The upper 60G wireless unit 15a includes a receiver 151, a demodulator 152, a modulator 153, a transmitter 154, a frequency synthesizer 155, a controller 156, and an I/F 157.

The receiver 151 receives a wireless signal in a channel allocated by the CH determination unit 148, via a 60G wireless antenna 150, and converts the wireless signal to a frequency in the 60G wireless module using an outgoing signal from the frequency synthesizer 155. Then, the receiver 151 transfers the signal which has been converted to the frequency in the 60G wireless module to the demodulator 152.

The demodulator 152 demodulates the signal received from the receiver 151, and transfers the signal to the controller 156. The modulator 153 modulates the transmission signal received from the controller 156, and transfers the signal to the transmitter 154.

The transmitter 154 receives the transmission signal from the modulator 153, and converts, using the outgoing signal from the frequency synthesizer 155, the transmission signal to the frequency of the channel allocated by the CH determination unit 148. Then, the transmitter 154 transmits the converted signal via the 60G wireless antenna 150.

The frequency synthesizer 155 receives information about the channel allocated by the CH determination unit 148 from the controller 156. Then, an outgoing signal to be used to convert the wireless signal received by the receiver 151 to the internal frequency is generated. Also, the frequency synthesizer 155 generates an outgoing signal to be used to convert the signal to be transmitted by the transmitter 154 from the internal frequency to the frequency of the channel allocated by the CH determination unit 148.

The controller 156 receives a reception signal from the demodulator 152, and transfers the signal to the XB 14 via the I/F 157. Also, the controller 156 receives a transmission signal from the XB 14 via the I/F 157, and transfers the signal to the modulator 153. Moreover, the controller 156 receives information about the channel allocated by the CH determination unit 148 from the XB 14 via the I/F 157, and transfers the information to the frequency synthesizer 155.

The I/F 157 is an interface used for transmission/reception of signals to/from the XB 14, and transfers a signal received from the controller 156 to the I/F 144, and transfers a signal received from the I/F 144 to the controller 156.

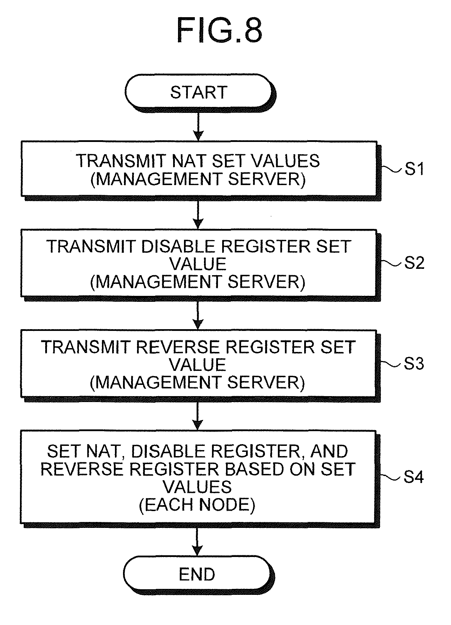

Next, an initial setting process by the information processing system according to the first embodiment will be described. The initial setting process here is the process that is performed at the time of initialization of the information processing system. FIG. 8 is a flow chart illustrating a flow of the initial setting process by the information processing system according to the first embodiment.

As illustrated in FIG. 8, in the initial setting process, the management server 20 transmits, to each node 10, NAT set values, that is, set values each of which indicating the correspondence relationship between a MAC address and a node ID set in the NAT 145 (step S1). These set values are common to the nodes, and are thus broadcasted to each node 10 from the management server 20.

Then, the management server 20 transmits a set value of the disable register 147 to nodes 10 for which an adjacent node is absent (step S2). The management server 20 does not transmit the set value of the disable register 147 to nodes 10 that use all of the top, bottom, left and right 60G wireless modules.

Then, the management server 20 transmits a set value of the reverse register 146 to each node 10 (step S3). The management server 20 does not transmit the set value of the reverse register 146 to nodes 10 for which the channel allocation rule that is based on whether the node ID is an odd number or an even number does not have to be reversed.

Next, each node 10 sets the NAT 145, the disable register 147, and the reverse register 146 based on the set values which have been transmitted (step S4).

In this manner, by the management server 20 transmitting the set values of the NAT 145, the disable register 147, and the reverse register 146 at the time of initialization, each node 10 may allocate a channel to each 60G wireless module. The management server 20 transmits the set values to each node 10 by using a wireless LAN.

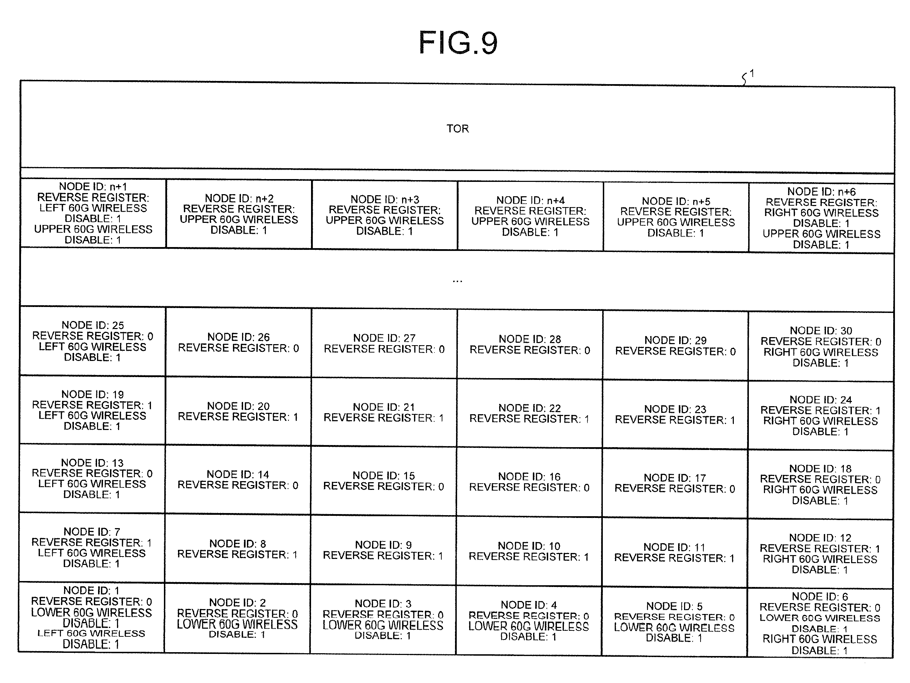

FIG. 9 is a diagram illustrating example allocation of node IDs, the reverse registers, and the disable registers. As illustrated in FIG. 9, the node IDs are sequentially allocated from 1 to 6 in the right direction from the bottom left node 10 in the rack 1. Then, 7 to 12 are sequentially allocated as the node IDs in the right direction from the node 10 at the left end, in one level higher, to the node 10 at the right end. The node IDs are allocated in the same manner for each level, sequentially from the left end to the right end, and in the topmost level, n+1 to n+6 are allocated as the node IDs, sequentially from the left end to the right end.

The value of the reverse register 146 is set to 0 for the nodes 10 in odd-numbered levels when counted from the bottom, and with respect to the nodes 10 in even-numbered levels when counted from the bottom, 1 is set because the channel allocation rule that is based on whether the node ID is odd-numbered or even-numbered is reversed.

With respect to the disable register 147, the nodes 10 in the lowest level do not have adjacent nodes 10 on the bottom, and their lower 60G wireless disable is set to 1, and the nodes 10 in the highest level do not have adjacent nodes 10 on the top, and their upper 60G wireless disable is set to 1. Also, the nodes 10 at the left end do not have adjacent nodes 10 on the left, and their left 60G wireless disable is set to 1, and the nodes 10 at the right end do not have adjacent nodes 10 on the right, and their right 60G wireless disable is set to 1.

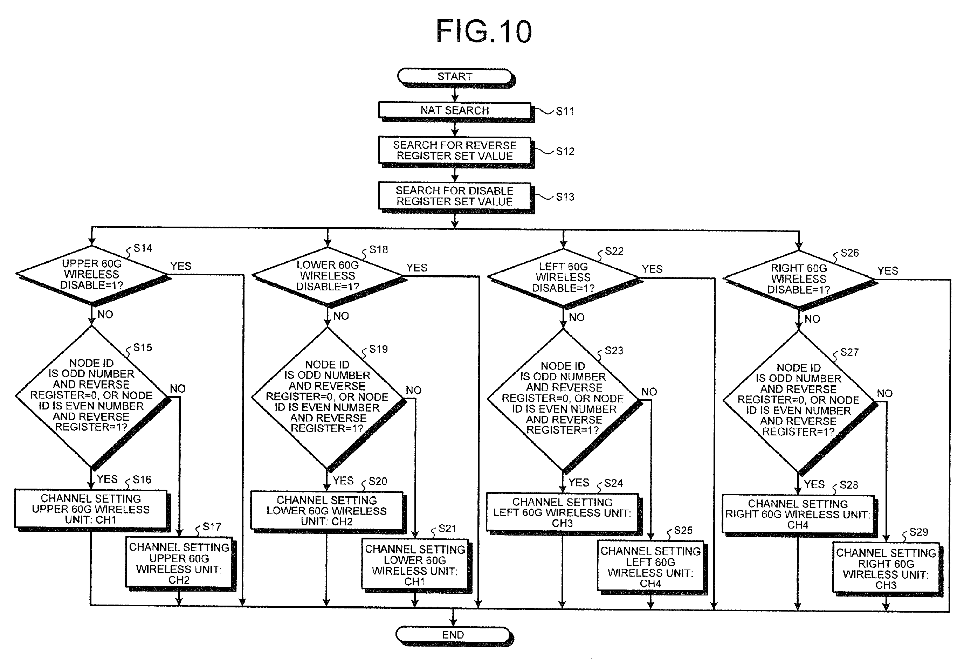

Next, a flow of a channel allocation process by the CH determination unit 148 according to the first embodiment will be described. FIG. 10 is a flow chart illustrating a flow of a channel allocation process by the CH determination unit 148 according to the first embodiment.

As illustrated in FIG. 10, the CH determination unit 148 performs an NAT search, that is, a search for the node ID of the self node using the NAT 145 (step S11). Then, the CH determination unit 148 searches for the set value of the reverse register 146 (step S12), and searches for the set value of the disable register 147 (step S13).

Then, the CH determination unit 148 performs the following process in parallel for the 60G wireless modules. That is, the CH determination unit 148 determines, for the upper 60G wireless unit 15a, whether the upper 60G wireless disable = 1 (step S14), and in the case where the upper 60G wireless disable = 1, ends the process without allocating a channel.

On the other hand, in the case where the upper 60G wireless disable = 0, the CH determination unit 148 determines whether or not the node ID is an odd number and the reverse register 146 = 0, or whether or not the node ID is an even number and the reverse register 146 = 1 (step S15). Here, the reverse register 146 = 0 indicates that the value of the reverse register 146 is 0, and the reverse register 146 = 1 indicates that the value of the reverse register 146 is 1.

Then, in the case where the node ID is an odd number and the reverse register 146 = 0, or the node ID is an even number and the reverse register 146 = 1, the CH determination unit 148 sets the channel of the upper 60G wireless unit 15a to CH1 (step S16). On the other hand, in cases other than cases where the node ID is an odd number and the reverse register 146 = 0, and where the node ID is an even number and the reverse register 146 = 1, the CH determination unit 148 sets the channel of the upper 60G wireless unit 15a to CH2 (step S17).

The CH determination unit 148 determines, in parallel, for the lower 60G wireless unit 15b, whether the lower 60G wireless disable = 1 (step S18), and in the case where the lower 60G wireless disable = 1, ends the process without allocating a channel.

On the other hand, in the case where the lower 60G wireless disable = 0, the CH determination unit 148 determines whether or not the node ID is an odd number and the reverse register 146 = 0, or whether or not the node ID is an even number and the reverse register 146 = 1 (step S19).

Then, in the case where the node ID is an odd number and the reverse register 146 = 0, or the node ID is an even number and the reverse register 146 = 1, the CH determination unit 148 sets the channel of the lower 60G wireless unit 15b to CH2 (step S20). On the other hand, in cases other than cases where the node ID is an odd number and the reverse register 146 = 0, and where the node ID is an even number and the reverse register 146 = 1, the CH determination unit 148 sets the channel of the lower 60G wireless unit 15b to CH1 (step S21).

The CH determination unit 148 determines, in parallel, for the left 60G wireless unit 15c, whether the left 60G wireless disable = 1 (step S22), and in the case where the left 60G wireless disable = 1, ends the process without allocating a channel.

On the other hand, in the case where the left 60G wireless disable = 0, the CH determination unit 148 determines whether or not the node ID is an odd number and the reverse register 146 = 0, or whether or not the node ID is an even number and the reverse register 146 = 1 (step S23).

Then, in the case where the node ID is an odd number and the reverse register 146 = 0, or the node ID is an even number and the reverse register 146 = 1, the CH determination unit 148 sets the channel of the left 60G wireless unit 15c to CH3 (step S24). On the other hand, in cases other than cases where the node ID is an odd number and the reverse register 146 = 0, and where the node ID is an even number and the reverse register 146 = 1, the CH determination unit 148 sets the channel of the left 60G wireless unit 15c to CH4 (step S25).

The CH determination unit 148 determines, in parallel, for the right 60G wireless unit 15d, whether the right 60G wireless disable = 1 (step S26), and in the case where the right 60G wireless disable = 1, ends the process without allocating a channel.

On the other hand, in the case where the right 60G wireless disable = 0, the CH determination unit 148 determines whether or not the node ID is an odd number and the reverse register 146 = 0, or whether or not the node ID is an even number and the reverse register 146 = 1 (step S27).

Then, in the case where the node ID is an odd number and the reverse register 146 = 0, or the node ID is an even number and the reverse register 146 = 1, the CH determination unit 148 sets the channel of the right 60G wireless unit 15d to CH4 (step S28). On the other hand, in cases other than cases where the node ID is an odd number and the reverse register 146 = 0, and where the node ID is an even number and the reverse register 146 = 1, the CH determination unit 148 sets the channel of the right 60G wireless unit 15d to CH3 (step S29).

As described above, according to the first embodiment, node IDs are stored in the NAT 145 in association with MAC addresses, and bit information indicating whether to reverse the channel allocation rule that is based on whether a node ID is an odd number or an even number is stored in the reverse register 146. Also, information indicating whether to use each 60G wireless module or not is stored in the disable register 147. Then, the CH determination unit 148 allocates a channel to each 60G wireless module based on the NAT 145, the reverse register 146, and the disable register 147.

That is, the CH determination unit 148 searches for the node ID of the self node using the NAT 145. Also, the CH determination unit 148 selects the 60G wireless module to be used by referring to the disable register 147. Then, the CH determination unit 148 allocates a channel, for the 60G wireless module to be used, based on whether the node ID is an odd number or an even number, and based on whether or not to reverse the channel allocation rule that is based on whether the node ID is an odd number or an even number. Accordingly, each node 10 may automatically allocate a channel to be used by each 60G wireless module.

Also, the information processing system according to the first embodiment is capable of preventing allocation of the same channel to the 60G wireless modules, of adjacent nodes 10, for performing communication in the same direction, and of preventing radio wave interference in high-speed wireless communication.

In the first embodiment, a case is described where CH1 and CH2, or CH2 and CH1, are allocated to the upper 60G wireless unit 15a and the lower 60G wireless unit 15b, and CH3 and CH4, or CH4 and CH3, are allocated to the left 60G wireless unit 15c and the right 60G wireless unit 15d. However, any channel allocation is allowed as long as the channels to be used by the 60G wireless modules, of adjacent nodes 10, for performing communication in the same direction are not the same, and other combinations of allocation are also allowed without being restricted to the combinations described above.

Also, in the first embodiment, a case is described where wireless modules that use a frequency band of 60 GHz are used, but the present invention is not limited to be such, and may be applied in the same manner to wireless modules that use other frequency bands.

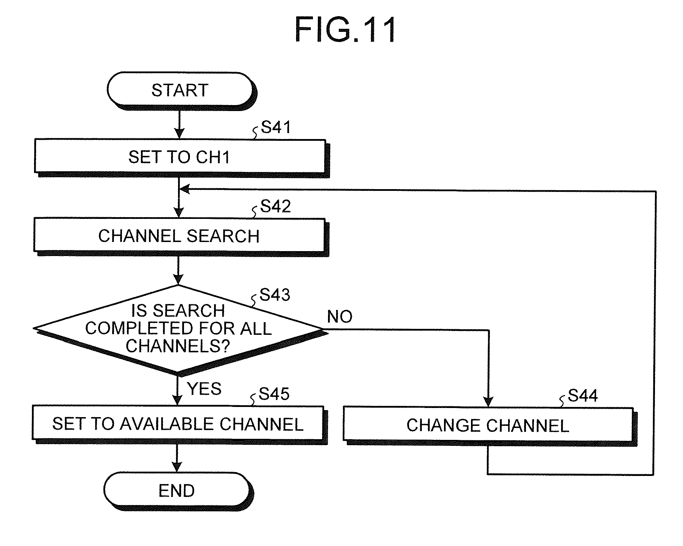

A channel may be allocated to the 60G wireless module by searching for an available channel. FIG. 11 is a flow chart illustrating a flow of a process of allocating a channel to the 60G wireless module by searching for an available channel.

As illustrated in FIG. 11, a node sets the channel of a 60G wireless module to CH1 (step S41), and performs a channel search (step S42). That is, the node checks whether CH1 is available or not by performing a search regarding the state of the surrounding radio waves for a predetermined period of time.

Then, the node determines whether the search is completed for all the channels or not (step S43), and in the case where there is a channel for which search is not yet performed, the node changes the channel (step S44), and returns to step S42. On the other hand, in the case where the search is completed for all the channels, the node sets the channel that is available among the channels for which search has been performed (step S45).

In this manner, the node may automatically allocate a channel by channel search. However, for example, even if CH1 is set by an adjacent node, in the case where the adjacent node is not emitting a radio wave when the node is performing channel search regarding CH1, the node perceives CH1 to be available. Accordingly, in the case of allocating a channel by channel search, the node has to separately perform management such that the channel is not the same as the channel of the 60G wireless module, of the adjacent node, for the same direction. Moreover, the node 10 according to the first embodiment may perform channel setting in a short time compared to the case of allocating a channel by channel search.

### [b] Second Embodiment

Now, in the first embodiment, the CH determination unit performs channel allocation using the reverse register 146, but channel allocation may also be performed without using the reverse register 146. Thus, in a second embodiment, a case where the CH determination unit allocates channels without using the reverse register 146 will be described.

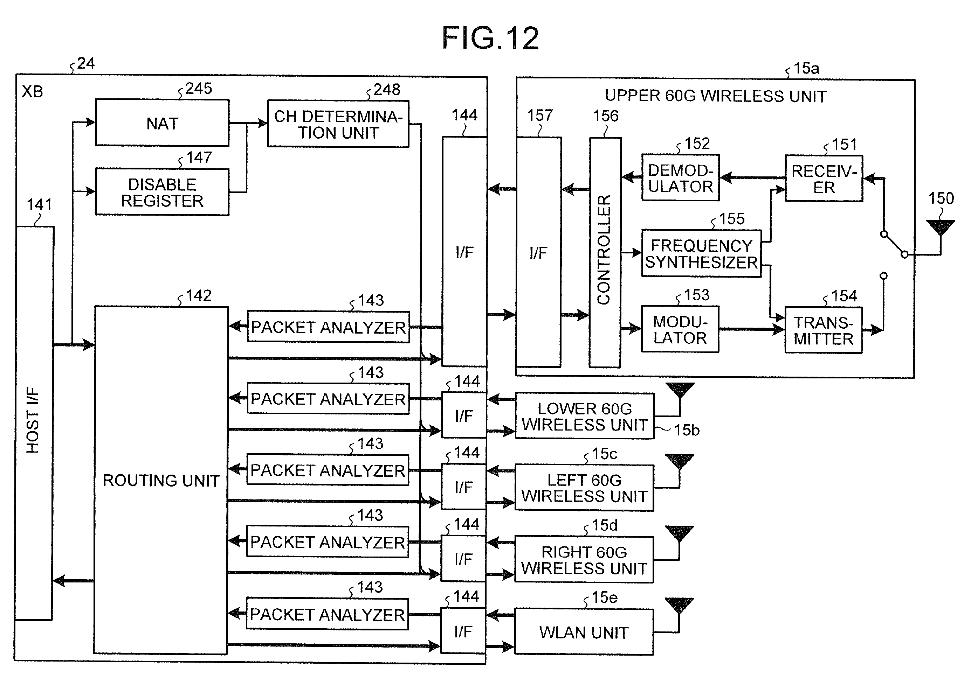

First, a structure of an XB according to the second embodiment will be described. FIG. 12 is a diagram illustrating a structure of an XB according to the second embodiment. Here, for the sake of explanation, a functional unit serving the same role as the unit illustrated in FIG. 5 will be denoted with the same reference, and detailed description thereof will be omitted.

As illustrated in FIG. 12, an XB 24 includes a host I/F 141, a routing unit 142, five packet analyzers 143, five I/Fs 144, an NAT 245, a disable register 147, and a CH determination unit 248.

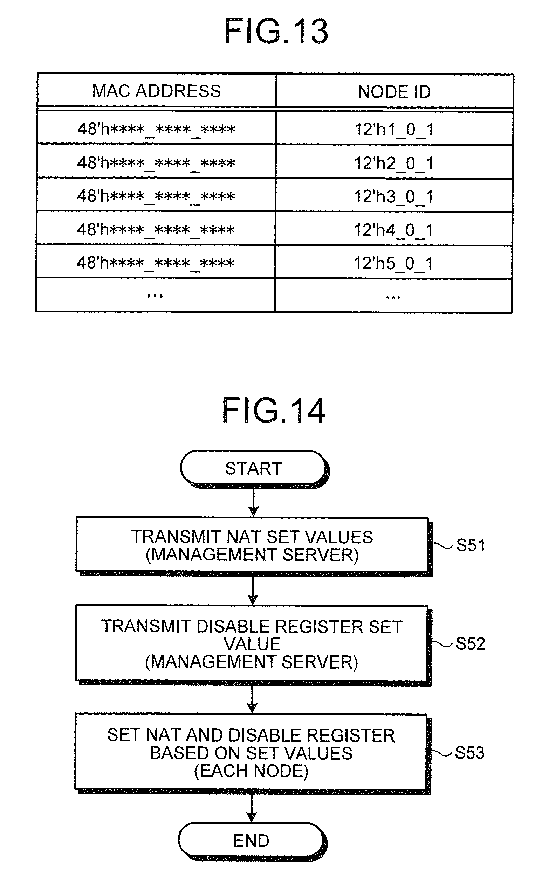

The NAT 245 is, like the NAT 145 according to the first embodiment, a search table used for searching for an identifier for identifying each node 10, but stores identifiers different from the NAT 145. FIG. 13 is a diagram illustrating examples of identifiers stored in the NAT 245 according to the second embodiment. As illustrated in FIG. 13, the NAT 245 stores, in association with each other, a MAC address and a node ID for each node.

The node ID is an identifier used for identifying each node 10, and also, indicates coordinates in the rack. The node ID takes the form of 12'h*_*_* with * as a hexadecimal number, and the first hexadecimal number indicates the X coordinate, and the other two hexadecimal numbers indicate the Y coordinate. The origin of the coordinates is the bottom left portion of the rack 1, and the horizontal direction of the rack 1 is the X axis, and the height direction of the rack 1 is the Y axis.

For example, 12'h1_0_1 indicates coordinates (1, 1), and indicates that the node 10 is located at the bottom left of the rack 1. Also, 12'h5_0_1 indicates coordinates (5, 1), and indicates that the node 10 is located at the lowest level of the rack 1, fifth from the left end.

The CH determination unit 248 allocates a channel to each 60G wireless module using the NAT 245 and the disable register 147. That is, the CH determination unit 248 calculates the coordinates of the self node from the node ID retrieved from the NAT 245, and reverses the allocation between a case where the calculated set of the X coordinate and the Y coordinate is (odd, odd) or (even, even), and a case where the calculated set is (odd, even) or (even, odd).

Specifically, in the case where the set of the X coordinate and the Y coordinate is (odd, odd) or (even, even), the CH determination unit 248 allocates CH1 to the upper 60G wireless unit 15a, and allocates CH2 to the lower 60G wireless unit 15b. Also, in the case where the set of the X coordinate and the Y coordinate is (odd, odd) or (even, even), the CH determination unit 248 allocates CH3 to the left 60G wireless unit 15c, and allocates CH4 to the right 60G wireless unit 15d.

Also, in the case where the set of the X coordinate and the Y coordinate is (even, odd) or (odd, even), the CH determination unit 248 allocates CH2 to the upper 60G wireless unit 15a, and allocates CH1 to the lower 60G wireless unit 15b. Also, in the case where the set of the X coordinate and the Y coordinate is (even, odd) or (odd, even), the CH determination unit 248 allocates CH4 to the left 60G wireless unit 15c, and allocates CH3 to the right 60G wireless unit 15d.

The CH determination unit 248 may allocate channels without using the reverse register 146, by allocating the channels based on the set of the X coordinate and the Y coordinate of the self node.

Next, an initial setting process by the information processing system according to the second embodiment will be described. FIG. 14 is a flow chart illustrating a flow of the initial setting process by the information processing system according to the second embodiment. As illustrated in FIG. 14, in the initial setting process, the management server 20 transmits, to each node 10, NAT set values, that is, set values each of which indicating the correspondence relationship between a MAC address and a node ID set in the NAT 245 (step S51). These set values are common to the nodes, and are thus broadcasted to each node 10 from the management server 20.

Then, the management server 20 transmits a set value of the disable register 147 to nodes 10 for which an adjacent node is absent (step S52). The management server 20 does not transmit the set value of the disable register 147 to nodes 10 that use all of the top, bottom, left and right 60G wireless modules.

Next, each node 10 sets the NAT 245 and the disable register 147 based on the set values which have been transmitted (step S53).

In this manner, by the management server 20 transmitting the set values of the NAT 245 and the disable register 147 at the time of initialization, each node 10 may allocate a channel to each 60G wireless module.

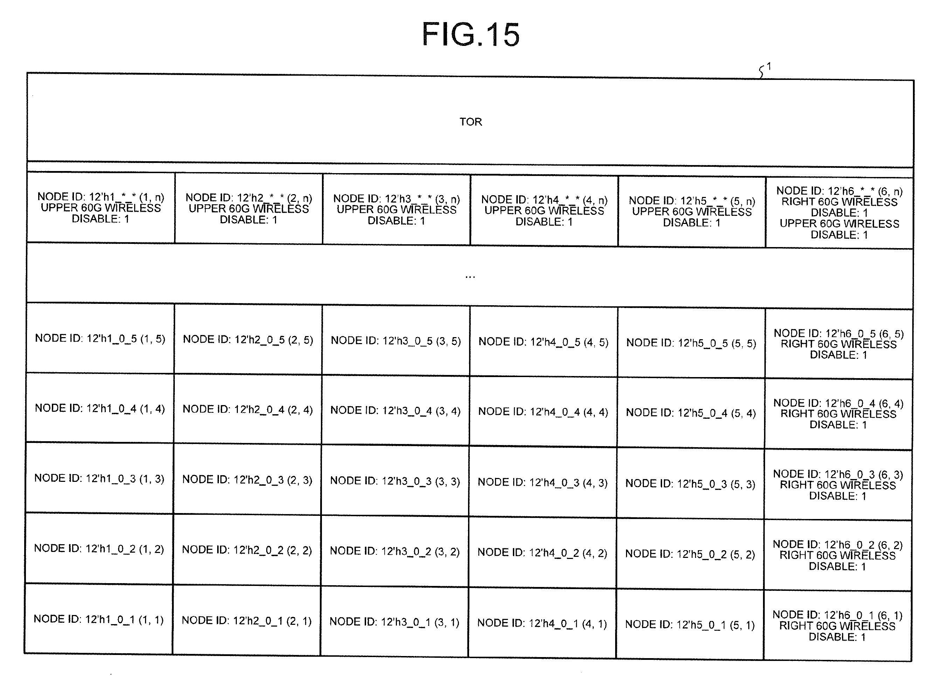

FIG. 15 is a diagram illustrating example allocation of node IDs and the disable registers 147. As illustrated in FIG. 15, the node IDs 12'h1_0_1 to 12'h6_0_1 are allocated to the nodes 10 in the lowest level of the rack 1. Also, 12'h1_0_2 to 12'h6_0_2 are allocated to the nodes 10 in the second lowest level of the rack 1. The node IDs are allocated in the same manner with respect to each level, and when the highest level is counted as the n-th from the bottom, 12'h1_*_* to 12'h6_*_* are allocated. Here, "**" are hexadecimal numbers corresponding to n. Also, in FIG. 15, (x, y) following each node ID indicates coordinates.

With respect to the disable register 147, the nodes 10 in the highest level do not have adjacent nodes 10 on the top, and their upper 60G wireless disable is set to 1, and the nodes 10 at the right end do not have adjacent nodes 10 on the right, and their right 60G wireless disable is set to 1. The Y coordinates of the nodes 10 in the lowest level are 1, and the X coordinates of the nodes 10 at the left end are 1, and thus, the CH determination unit 248 may determine the nodes 10 in the lowest level and the nodes 10 at the left end based on the coordinates, and thus, does not use the disable register 147.

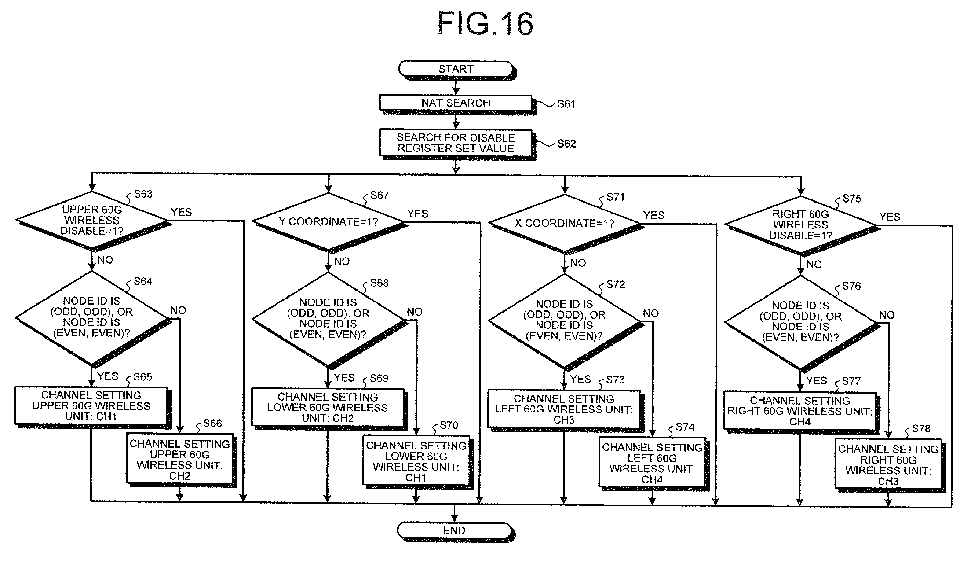

Next, a flow of a channel allocation process by the CH determination unit 248 according to the second embodiment will be described. FIG. 16 is a flow chart illustrating a flow of a channel allocation process by the CH determination unit 248 according to the second embodiment.

As illustrated in FIG. 16, the CH determination unit 248 performs an NAT search, that is, a search for the node ID of the self node using the NAT 245 (step S61), and searches for the set value of the disable register 147 (step S62).

Then, the CH determination unit 248 performs the following process in parallel for the 60G wireless modules. That is, the CH determination unit 248 determines, for the upper 60G wireless unit 15a, whether the upper 60G wireless disable = 1 (step S63), and in the case where the upper 60G wireless disable = 1, ends the process without allocating a channel.

On the other hand, in the case where the upper 60G wireless disable = 0, the CH determination unit 248 determines whether the node ID is (odd, odd), or whether the node ID is (even, even) (step S64). Here, (odd, odd) indicates that both of the X coordinate and the Y coordinate are odd numbers, and (even, even) indicates that both of the X coordinate and the Y coordinate are even numbers.

Then, in the case where the node ID is (odd, odd) or (even, even), the CH determination unit 248 sets the channel of the upper 60G wireless unit 15a to CH1 (step S65). On the other hand, in cases other than cases where the node ID is (odd, odd) and where the node ID is (even, even), the CH determination unit 248 sets the channel of the upper 60G wireless unit 15a to CH2 (step S66).

The CH determination unit 248 determines, in parallel, for the lower 60G wireless unit 15b, whether the Y coordinate of the self node is 1 or not (step S67), and in the case where the Y coordinate is 1, the node 10 is of the lowest level of the rack 1, and thus, the CH determination unit 248 ends the process without allocating a channel.

On the other hand, in the case where the Y coordinate is not 1, the CH determination unit 248 determines whether the node ID is (odd, odd), or whether the node ID is (even, even) (step S68). Then, in the case where the node ID is (odd, odd) or (even, even), the CH determination unit 248 sets the channel of the lower 60G wireless unit 15b to CH2 (step S69). On the other hand, in cases other than cases where the node ID is (odd, odd) and where the node ID is (even, even), the CH determination unit 248 sets the channel of the lower 60G wireless unit 15b to CH1 (step S70).

The CH determination unit 248 determines, in parallel, for the left 60G wireless unit 15c, whether the X coordinate of the self node is 1 or not (step S71), and in the case where the X coordinate is 1, the node 10 is at the left end of the rack 1, and the process is ended without allocation of a channel.

On the other hand, in the case where the X coordinate is not 1, the CH determination unit 248 determines whether the node ID is (odd, odd), or whether the node ID is (even, even) (step S72). Then, in the case where the node ID is (odd, odd), or is (even, even), the CH determination unit 248 sets the channel of the left 60G wireless unit 15c to CH3 (step S73). On the other hand, in cases other than cases where the node ID is (odd, odd) and where the node ID is (even, even), the CH determination unit 248 sets the channel of the left 60G wireless unit 15c to CH4 (step S74).

The CH determination unit 248 determines, in parallel, for the right 60G wireless unit 15d, whether the right 60G wireless disable = 1 (step S75), and in the case where the right 60G wireless disable = 1, ends the process without allocating a channel.

On the other hand, in the case where the right 60G wireless disable = 0, the CH determination unit 248 determines whether the node ID is (odd, odd), or whether the node ID is (even, even) (step S76). Then, in the case where the node ID is (odd, odd) or is (even, even), the CH determination unit 248 sets the channel of the right 60G wireless unit 15d to CH4 (step S77). On the other hand, in cases other than cases where the node ID is (odd, odd) and where the node ID is (even, even), the CH determination unit 248 sets the channel of the right 60G wireless unit 15d to CH3 (step S78).

For example, the X coordinate and the Y coordinate of the self node ID of a node 10 whose node ID is 12'h1_0_1 are (1, 1), and are (odd, odd), and thus, CH1 is set for the upper 60G wireless unit 15a, and CH4 is set for the right 60G wireless unit 15d. Also, since the X coordinate and the Y coordinate of this node 10 are both 1, channels are not set for the lower 60G wireless unit 15b and the left 60G wireless unit 15c.

Also, the X coordinate and the Y coordinate of the self node ID of a node 10 whose node ID is 12'h1_0_2 are (1, 2), and are (odd, even), and thus, CH2 is set for the upper 60G wireless unit 15a, CH3 is set for the right 60G wireless unit 15d, and CH1 is set for the lower 60G wireless unit 15b. Also, since the X coordinate of this node 10 is 1, a channel is not set for the left 60G wireless unit 15c.

Furthermore, the X coordinate and the Y coordinate of the self node ID of a node 10 whose node ID is 12'h6_0_1 are (6, 1), and are (even, odd), and thus, Ch2 is set for the upper 60G wireless unit 15a, and CH4 is set for the left 60G wireless unit 15c. Also, since the Y coordinate of this node 10 is 1, a channel is not set for the lower 60G wireless unit 15b. Also, this node 10 is located at the right end of the rack, and no node is present on the right of this node. Accordingly, the right 60G wireless disable in the 60G wireless disable register is set to 1, and a channel is not set for the right 60G wireless unit 15d of this node 10.

As described above, according to the second embodiment, the NAT 245 stores node IDs representing the coordinates of the nodes 10 in the rack, and the CH determination unit 248 allocates a channel based on the coordinates of the self node. Accordingly, each node 10 may allocate channels without using the reverse register 146.

### [c] Third Embodiment

Now, in the first and second embodiments described above, the CH determination unit allocates channels by using the NAT, but channels may also be allocated without using the NAT. Accordingly, in a third embodiment, a case where the CH determination unit allocates channels without using the NAT will be described.

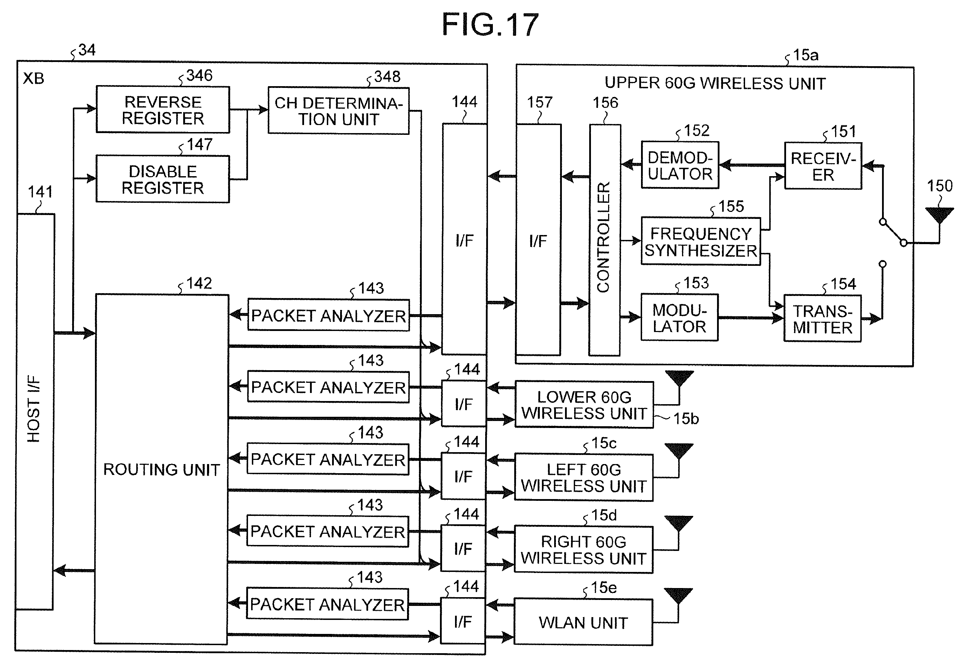

First, a structure of an XB according to the third embodiment will be described. FIG. 17 is a diagram illustrating a structure of the XB according to the third embodiment. For the sake of explanation, a functional unit serving the same role as the unit illustrated in FIG. 5 will be denoted with the same reference, and detailed description thereof will be omitted.

As illustrated in FIG. 17, an XB 34 includes a host I/F 141, a routing unit 142, five packet analyzers 143, five I/Fs 144, a reverse register 346, a disable register 147, and a CH determination unit 348.

The reverse register 346 is a register storing 1-bit information indicating whether to reverse channel allocation or not. The value of the reverse register 346 is set such that the value is reversed between adjacent nodes.

The CH determination unit 348 allocates channels based on the reverse register 346 to 60G wireless modules whose use are specified by the disable register 147. Specifically, in the case where the value of the reverse register 346 is 0, the CH determination unit 348 allocates CH1 to the upper 60G wireless unit 15a, CH2 to the lower 60G wireless unit 15b, CH3 to the left 60G wireless unit 15c, and CH4 to the right 60G wireless unit 15d. On the other hand, in the case where the value of the reverse register 346 is 1, the CH determination unit 348 allocates CH2 to the upper 60G wireless unit 15a, CH1 to the lower 60G wireless unit 15b, CH4 to the left 60G wireless unit 15c, and CH3 to the right 60G wireless unit 15d.

In this manner, each node 10 sets the value of the reverse register 346 in such a way that the value is reversed between adjacent nodes, and allocates a channel to each 60G wireless module by referring to the reverse register 346, and may thereby prevent radio wave interference in 60G wireless communication.

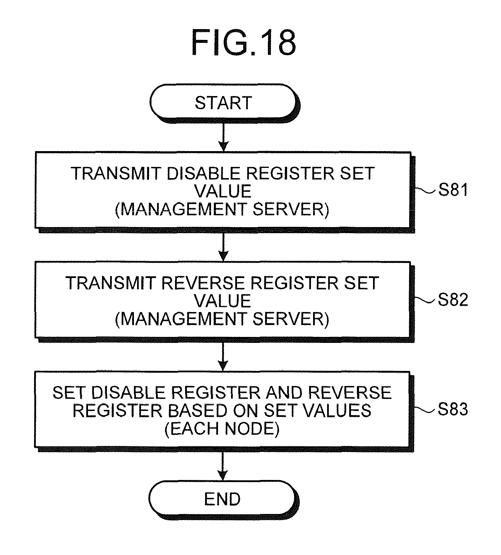

Next, an initial setting process by the information processing system according to the third embodiment will be described. FIG. 18 is a flow chart illustrating a flow of the initial setting process by the information processing system according to the third embodiment. As illustrated in FIG. 18, in the initial setting process, the management server 20 transmits the set value of the disable register 147 to nodes 10 for which an adjacent node is absent (step S81). The management server 20 does not transmit the set value of the disable register 147 to nodes 10 that use all of the top, bottom, left and right 60G wireless modules.

Then, the management server 20 transmits the set value of the reverse register 346 to each node 10 (step S82). Then, each node 10 sets the disable register 147 and the reverse register 346 based on the set value or the set values having been transmitted (step S83).

In this manner, by the management server 20 transmitting the set values of the disable register 147 and the reverse register 346 at the time of initialization, each node 10 may allocate a channel to each 60G wireless module.

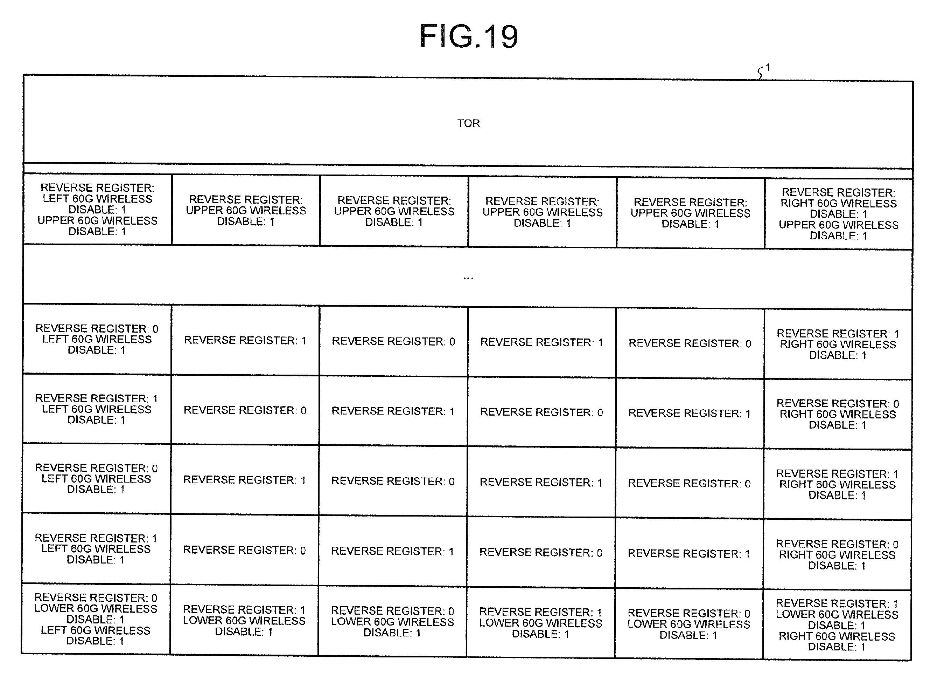

FIG. 19 is a diagram illustrating example allocation of the reverse registers 346 and the disable registers 147. As illustrated in FIG. 19, values of the reverse registers 346 are allocated to each node 10 in such a way that the values are reversed between adjacent nodes 10.

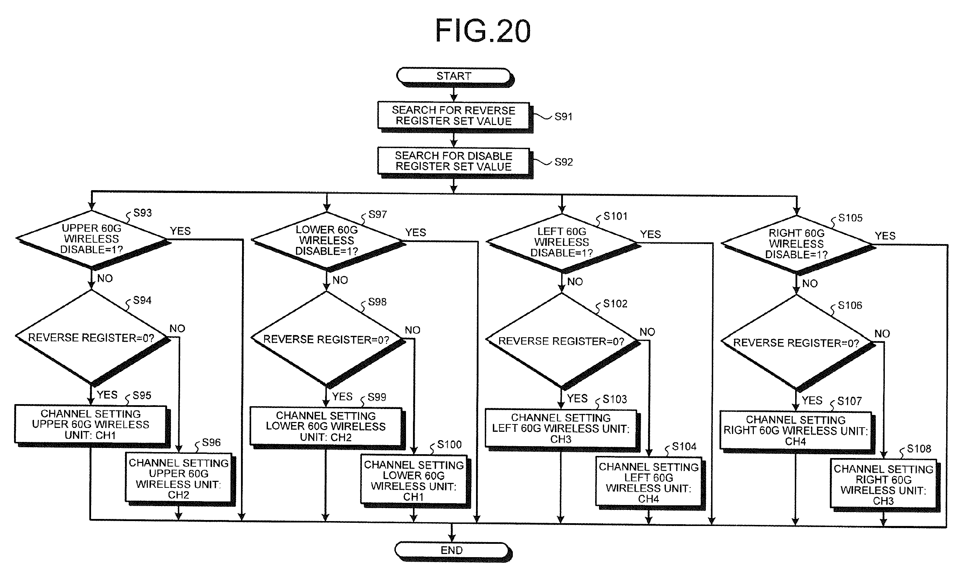

Next, a flow of a channel allocation process by the CH determination unit 348 according to the third embodiment will be described. FIG. 20 is a flow chart illustrating a flow of the channel allocation process by the CH determination unit 348 according to the third embodiment. As illustrated in FIG. 20, the CH determination unit 348 searches for the set value of the reverse register 346 (step S91), and searches for the set value of the disable register 147 (step S92).

Then, the CH determination unit 348 performs the following process in parallel for the 60G wireless modules. That is, the CH determination unit 348 determines, for the upper 60G wireless unit 15a, whether the upper 60G wireless disable = 1 (step S93), and in the case where the upper 60G wireless disable = 1, ends the process without allocating a channel.

On the other hand, in the case where the upper 60G wireless disable = 0, the CH determination unit 348 determines whether the value of the reverse register 346 is 0 or not (step S94). Then, in the case where the value of the reverse register 346 is 0, the CH determination unit 348 sets the channel of the upper 60G wireless unit 15a to CH1 (step S95). On the other hand, in the case where the value of the reverse register 346 is not 0, the CH determination unit 348 sets the channel of the upper 60G wireless unit 15a to CH2 (step S96).

The CH determination unit 348 determines, in parallel, for the lower 60G wireless unit 15b, whether the lower 60G wireless disable = 1 (step S97), and in the case where the lower 60G wireless disable = 1, ends the process without allocating a channel.

On the other hand, in the case where the lower 60G wireless disable = 0, the CH determination unit 348 determines whether the value of the reverse register 346 is 0 or not (step S98). Then, in the case where the value of the reverse register 346 is 0, the CH determination unit 348 sets the channel of the lower 60G wireless unit 15b to CH2 (step S99). On the other hand, in the case where the value of the reverse register 346 is not 0, the CH determination unit 348 sets the channel of the lower 60G wireless unit 15b to CH1 (step S100).

The CH determination unit 348 determines, in parallel, for the left 60G wireless unit 15c, whether the left 60G wireless disable = 1 (step S101), and in the case where the left 60G wireless disable = 1, ends the process without allocating a channel.

On the other hand, in the case where the left 60G wireless disable = 0, the CH determination unit 348 determines whether the value of the reverse register 346 is 0 or not (step S102). Then, in the case where the value of the reverse register 346 is 0, the CH determination unit 348 sets the channel of the left 60G wireless unit 15c to CH3 (step S103). On the other hand, in the case where the value of the reverse register 346 is not 0, the CH determination unit 348 sets the channel of the left 60G wireless unit 15c to CH4 (step S104).

The CH determination unit 348 determines, in parallel, for the right 60G wireless unit 15d, whether the right 60G wireless disable = 1 (step S105), and in the case where the right 60G wireless disable = 1, ends the process without allocating a channel.

On the other hand, in the case where the right 60G wireless disable = 0, the CH determination unit 348 determines whether the value of the reverse register 346 is 0 or not (step S106). Then, in the case where the value of the reverse register 346 is 0, the CH determination unit 348 sets the channel of the right 60G wireless unit 15d to CH4 (step S107). On the other hand, in the case where the value of the reverse register 346 is not 0, the CH determination unit 348 sets the channel of the right 60G wireless unit 15d to CH3 (step S108).

As described above, in the third embodiment, the reverse register 346 stores a value that is reversed between adjacent nodes 10, and the CH determination unit 348 allocates a channel to each 60G wireless module by referring to the reverse register 346. Accordingly, the information processing system may allocate different channels to the 60G wireless modules, of adjacent nodes 10, for the same direction, and may prevent radio wave interference. In the third embodiment, a case is described where the XB 34 includes the reverse register 346 and the disable register 147, but the reverse register 346 and the disable register 147 may be provided outside the XB 34 instead.

### [d] Fourth Embodiment

Now, in the first to the third embodiments described above, cases have been described where wireless communication is performed by wireless modules that use a 60 GHz band where four channels may be used, but wireless communication may also be performed by wireless modules that use a frequency band where five or more channels may be used. Accordingly, in a fourth embodiment, a case where wireless communication is performed by wireless modules that use a frequency band where five channels may be used will be described as an example. For the sake of explanation, a wireless module that uses a frequency band where five channels may be used will also be referred to as a 60G wireless module.

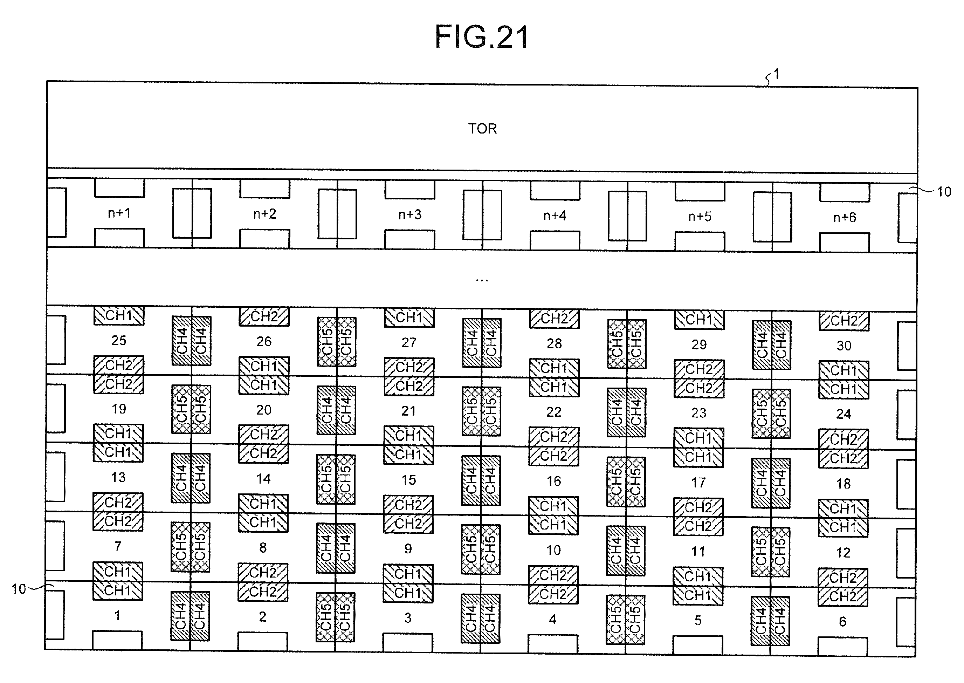

FIG. 21 is a diagram illustrating allocation of channels to be used in 60G wireless communication according to the fourth embodiment. In FIG. 21, of five channels CH1 to CH5 that may be used, CH1 and CH2 are used for communication between vertically adjacent nodes 10, and CH4 and CH5 are used for communication between horizontally adjacent nodes 10.

In this manner, in the case of using a frequency band where five channels may be used, by selecting arbitrary four channels from the five channels, the information processing system may allocate channels in the same manner as in the case where a frequency band where four channels may be used is used.

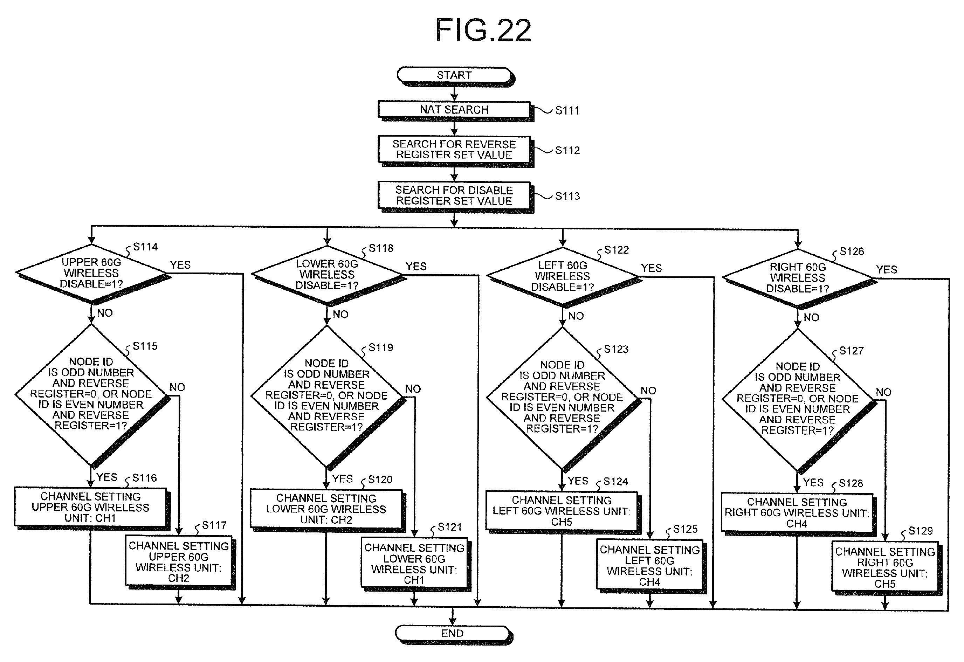

Next, a flow of a channel allocation process by a CH determination unit 448 according to the fourth embodiment will be described. An XB according to the fourth embodiment has the same structure as the XB 14 illustrated in FIG. 5 except that the CH determination unit 448 is provided instead of the CH determination unit 148. FIG. 22 is a flow chart illustrating a flow of a channel allocation process by the CH determination unit 448 according to the fourth embodiment.

As illustrated in FIG. 22, the CH determination unit 448 performs NAT search (step S111). Then, the CH determination unit 448 searches for the set value of the reverse register 146 (step S112), and searches for the set value of the disable register 147 (step S113).

Then, the CH determination unit 448 performs the following process in parallel for the 60G wireless modules. That is, the CH determination unit 448 determines, for the upper 60G wireless unit 15a, whether the upper 60G wireless disable = 1 (step S114), and in the case where the upper 60G wireless disable = 1, ends the process without allocating a channel.

On the other hand, in the case where the upper 60G wireless disable = 0, the CH determination unit 448 determines whether or not the node ID is an odd number and the reverse register 146 = 0, or whether or not the node ID is an even number and the reverse register 146 = 1 (step S115).

Then, in the case where the node ID is an odd number and the reverse register 146 = 0, or the node ID is an even number and the reverse register 146 = 1, the CH determination unit 448 sets the channel of the upper 60G wireless unit 15a to CH1 (step S116). On the other hand, in cases other than cases where the node ID is an odd number and the reverse register 146 = 0, and where the node ID is an even number and the reverse register 146 = 1, the CH determination unit 448 sets the channel of the upper 60G wireless unit 15a to CH2 (step S117).

The CH determination unit 448 determines, in parallel, for the lower 60G wireless unit 15b, whether the lower 60G wireless disable = 1 (step S118), and in the case where the lower 60G wireless disable = 1, ends the process without allocating a channel.

On the other hand, in the case where the lower 60G wireless disable = 0, the CH determination unit 448 determines whether the node ID is an odd number and the reverse register 146 = 0, or whether the node ID is an even number and the reverse register 146 = 1 (step S119).

Then, in the case where the node ID is an odd number and the reverse register 146 = 0, or the node ID is an even number and the reverse register 146 = 1, the CH determination unit 448 sets the channel of the lower 60G wireless unit 15b to CH2 (step S120). On the other hand, in cases other than cases where the node ID is an odd number and the reverse register 146 = 0, and where the node ID is an even number and the reverse register 146 = 1, the CH determination unit 448 sets the channel of the lower 60G wireless unit 15b to CH1 (step S121).

The CH determination unit 448 determines, in parallel, for the left 60G wireless unit 15c, whether the left 60G wireless disable = 1 (step S122), and in the case where the left 60G wireless disable = 1, ends the process without allocating a channel.

On the other hand, in the case where the left 60G wireless disable = 0, the CH determination unit 448 determines whether the node ID is an odd number and the reverse register 146 = 0, or whether the node ID is an even number and the reverse register 146 = 1 (step S123).

Then, in the case where the node ID is an odd number and the reverse register 146 = 0, or the node ID is an even number and the reverse register 146 = 1, the CH determination unit 448 sets the channel of the left 60G wireless unit 15c to CH5 (step S124). On the other hand, in cases other than cases where the node ID is an odd number and the reverse register 146 = 0, and where the node ID is an even number and the reverse register 146 = 1, the CH determination unit 448 sets the channel of the left 60G wireless unit 15c to CH4 (step S125).

The CH determination unit 448 determines, in parallel, for the right 60G wireless unit 15d, whether the right 60G wireless disable = 1 (step S126), and in the case where the right 60G wireless disable = 1, ends the process without allocating a channel.

On the other hand, in the case where the right 60G wireless disable = 0, the CH determination unit 448 determines whether the node ID is an odd number and the reverse register 146 = 0, or whether the node ID is an even number and the reverse register 146 = 1 (step S127).

Then, in the case where the node ID is an odd number and the reverse register 146 = 0, or the node ID is an even number and the reverse register 146 = 1, the CH determination unit 448 sets the channel of the right 60G wireless unit 15d to CH4 (step S128). On the other hand, in cases other than cases where the node ID is an odd number and the reverse register 146 = 0, and where the node ID is an even number and the reverse register 146 = 1, the CH determination unit 448 sets the channel of the right 60G wireless unit 15d to CH5 (step S129).

As described above, in the fourth embodiment, the CH determination unit 448 selects four channels from five channels that may be used, and allocates the channels to the 60G wireless modules. Accordingly, the node 10 may automatically allocate channels to the wireless modules even in the case of performing wireless communication by wireless modules that use a frequency band where five or more channels may be used.

In the first to the fourth embodiments, cases have been described where the XB is realized by hardware, but a communication program having the same function may be obtained by realizing the routing function and the channel allocation function of the XB by software. Thus, a hardware structure of an XB for executing the communication program will be described.

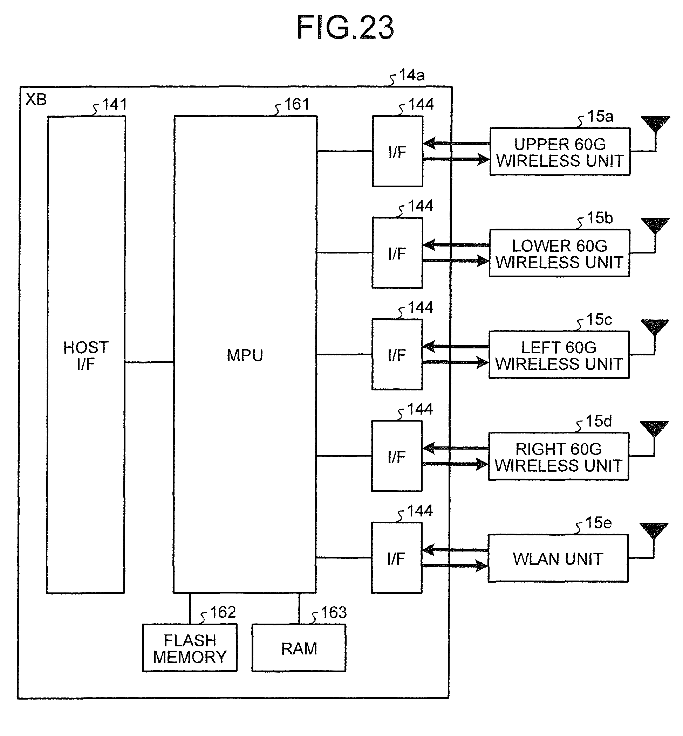

FIG. 23 is a diagram illustrating a hardware structure of an XB for executing the communication program. As illustrated in FIG. 23, an XB 14a includes a host I/F 141, five I/Fs 144, an MPU (Micro Processing Unit) 161, a flash memory 162, and a RAM (Random Access Memory) 163.

The host I/F 141 is an interface to the CPU 11 of the self node, and transfers a packet received from the CPU 11 to the MPU 161, and transfers a packet received from the MPU 161 to the CPU 11 of the self node. The I/F 144 converts a signal received from a 60G wireless module or a WLAN module into a packet, and transfers the packet to the MPU 161. Also, the I/F 144 converts a packet received from the MPU 161 into a signal, and transfers the signal to a connected 60G wireless module or WLAN module.

The MPU 161 is a processing device that reads a communication program from the flash memory 162, and executes the communication program. The flash memory 162 is a non-volatile memory storing the communication program. Also, the flash memory 162 stores information stored in the NAT 145, the reverse register 146, and the disable register 147. The RAM 163 is a memory storing results in the midway obtained in the execution of the communication program, tables and the like. Pieces of information stored in the NAT 145, the reverse register 146, and the disable register 147 are read from the flash memory 162 and loaded in the RAM 163 at the time of execution of the communication program.

Also, in the first to the fourth embodiments, cases have been described where the information processing apparatuses are two-dimensionally arranged in a rack, but the present invention is not limited to such cases, and may be similarly applied to a case where the information processing apparatuses are arranged three-dimensionally in the rack.

Also, in the first to the fourth embodiments, cases have been described where the information processing apparatus performs wireless communication in four directions of up, down, left and right. However, the present invention is not limited to such cases, and may be similarly applied to a case where wireless communication is performed in many more directions, such as eight directions of up, down, left, right, up-right, down-right, up-left, and down-left.

Furthermore, in the first to the fourth embodiments, cases have been described where all the information processing apparatuses in the rack perform wireless communication in four directions of up, down, left and right. However, the present invention is not limited to such cases, and may be similarly applied to a case where information processing apparatuses that perform wireless communication in four directions of up, down, left and right, and information processing apparatuses that perform wireless communication in two directions of up and down, or left and right are present in the rack in a mixed manner.

Moreover, in the first to the fourth embodiments, cases have been described where the disable register 147 is used. However, the present invention is not limited to such cases, and may be similarly applied to a case where channels are allocated without using the disable register 147, as in the case of allocating a channel also to a 60G wireless module that is not used.

According to an aspect of the embodiments, a channel to be used by a wireless module may be automatically allocated.

## Claims

1. An information processing apparatus (10) comprising:
an allocation unit (148, 248, 348) that allocates a channel to be used for wireless communication by the information processing apparatus (10) in a housing (1) based on position information of the information processing apparatus (10) in the housing (1) in such a way that the channel is not same as a channel to be used for wireless communication in a same direction by an adjacent information processing apparatus (10); and
a communication unit (15a-15d) that performs wireless communication with another information processing apparatus (10) in the housing (1) by using the channel allocated by the allocation unit (148, 248, 348).

2. The information processing apparatus (10) according to claim 1,
wherein information processing apparatuses (10) are arranged two-dimensionally in the housing (1), with an even number of information processing apparatuses (10) being arranged in a first axis direction, each information processing apparatus (10) including a plurality of the communication units (15a-15d),
wherein a number storage unit (145) that stores, for respective information processing apparatuses (10), serial integer numbers allocated to respective information processing apparatuses (10) sequentially from a predetermined position in the housing (1) in the first axis direction, and after reaching an information processing apparatus (10) at an end in the first axis direction, from another end in a level that is shifted by one in a second axis direction, and
a reversal information storage unit (146) that stores whether a position is odd-numbered or even-numbered in the second axis direction are further comprised as the position information, and
wherein the allocation unit (148) allocates different channels to respective communication units (15a-15d) based on the number storage unit (145) and the reversal information storage unit (146).

3. The information processing apparatus (10) according to claim 1,
wherein information processing apparatuses (10) are arranged two-dimensionally in the housing (1), with an odd number of information processing apparatuses (10) being arranged in a first axis direction, each information processing apparatus (10) including a plurality of the communication units (15a-15d),
wherein a number storage unit (145) that stores, for respective information processing apparatuses (10), serial integer numbers allocated to respective information processing apparatuses (10) sequentially from a predetermined position in the housing (1) in the first axis direction, and after reaching an information processing apparatus (10) at an end in the first axis direction, from another end in a level that is shifted by one in a second axis direction is further comprised as the position information, and
wherein the allocation unit (148) allocates different channels to respective communication units (15a-15d) based on the number storage unit (145).

4. The information processing apparatus according to claim 1,
wherein each information processing apparatus (10) includes a plurality of the communication units (15a-15d),
wherein an identifier storage unit (245) that stores, for each information processing apparatus (10), an apparatus identifier used to identify the information processing apparatus (10) and a position in the housing (1) is further comprised as the position information, and
wherein the allocation unit (248) allocates different channels to respective communication units (15a-15d) based on the identifier storage unit (245).

5. The information processing apparatus (10) according to claim 1,
wherein each information processing apparatus (10) includes a plurality of the communication units (15a-15d),
wherein a reversal information storage unit (146) that stores a bit value reversed for adjacent information processing apparatuses (10) in the housing (1) is further comprised as the position information, and
wherein the allocation unit (348) allocates different channels to respective communication units (15a-15d) based on the reversal information storage unit (146).

6. The information processing apparatus (10) according to any one of claims 1 to 5,
wherein each information processing apparatus (10) includes a plurality of the communication units (15a-15d), and
wherein the allocation unit (148, 248, 348) allocates, in association, all channels included in a predetermined frequency band to communication units (15a-15d) of the number of channels.

7. The information processing apparatus (10) according to any one of claims 1 to 5,
wherein each information processing apparatus (10) includes a plurality of the communication units (15a-15d), and
wherein the allocation unit (148, 248, 348) selects, from all channels included in a predetermined frequency band, channels of the number of communication units (15a-15d), and allocates the selected channels to respective communication units (15a-15d).

8. The information processing apparatus (10) according to any one of claims 2 to 7, comprising:
a use information storage unit (147), as the position information, that stores information about whether or not to use each communication unit (15a-15d), based on a position in the housing (1),
wherein the allocation unit (148, 248, 348) allocates different channels to respective communication units (15a-15d) based on the use information storage unit (147).

9. A communication method performed by an information processing apparatus in a housing, the method comprising:
allocating a channel to be used for wireless communication by the self apparatus based on position information of the self apparatus in the housing in such a way that the channel is not same as a channel to be used for wireless communication in a same direction by an adjacent information processing apparatus; and
performing wireless communication with another information processing apparatus in the housing by using the allocated channel.

10. A computer-readable storage medium storing a communication program that causes a processing device embedded in an information processing apparatus in a housing to execute a process comprising:
allocating a channel to be used for wireless communication by the information processing apparatus based on position information of the information processing apparatus in the housing in such a way that the channel is not same as a channel to be used for wireless communication in a same direction by an adjacent information processing apparatus; and
instructing that wireless communication is to be performed with another information processing apparatus in the housing by using the allocated channel.
